# EUROPÄISCHE PATENTSCHRIFT

(11) **EP 2 964 133 B1**
(45) Veröffentlichungstag und Bekanntmachung des Hinweises auf die Patenterteilung: **14.11.2018**
(21) Anmeldenummer: 14708545.0
(22) Anmeldetag: 07.03.2014
(51) Int. Cl.: A61C 8/00

(54) **ZAHNIMPLANTAT**
TOOTH IMPLANT
IMPLANT DENTAIRE

(30) Priorität: 08.03.2013 CH 567132013
(43) Veröffentlichungstag der Anmeldung: 13.01.2016
(73) Patentinhaber: Dentalpoint AG, 8048 Zürich (CH)
(72) Erfinder: BOLLETER, Philip, 8048 Zürich (CH)
(74) Vertreter: Rentsch Partner AG
(86) Internationale Anmeldenummer: PCT/EP2014/054481
(87) Internationale Veröffentlichungsnummer: WO 2014/135690

(56) Entgegenhaltungen:
- WO-A1-2006/047901
- CH-A1- 704 382
- CH-A5- 696 800
- US-A1- 2003 068 599
- US-A1- 2003 194 679
- US-A1- 2010 143 869
- US-A1- 2012 288 826

## Beschreibung

### Technische Gebiet

Die Erfindung betrifft ein Zahnimplantat gemäss dem Oberbegriff des Anspruchs 1.

### Stand der Technik

Aus dem Stand der Technik (z.B. US2010143869) sind zahlreiche zweitteilige Zahnersatzsysteme aus metallischen sowie keramischen Werkstoffen bekannt. So wird von der Anmelderin selbst seit Jahren Entwicklungsarbeit im Bereich dieser zweiteiliger keramischer Implantate geleistet, eine dieser Entwicklungen wird unter dem Markennamen Zeramex® T vertrieben. Die ZERAMEX T Verbindung zeichnet sich durch eine zylindrische Passung und einen proximal zur zylindrischen Passung angeordneten innen liegenden Mehrkant, vorzugsweise einen 3-kant, im Implantat aus. Dies erlaubt, beispielsweise die Positionierung des Abutments in sechs verschiedenen Positionen im Winkel von jeweils 60° und ermöglicht weiterhin eine zusätzliche Aufnahme von Drehmomentkräften.

Innerhalb von einer durchschnittlichen Einheilszeit von sechs bis acht Wochen, wächst das Implantat in den Kieferknochen ein. Als nächsten Schritt erfolgt die Abducknahme mit der anschliessenden Fertigung des Meistermodells. Es hat sich herausgestellt, dass Implantate nicht immer gerade in den Kieferknochen einwachsen, was die Abdrucknahmen entsprechend erschwert. Die Wiedergabe der genauen Position des Implantats durch Abformung ist jedoch wichtig um später Sekundärteile wie die Zahnkrone präzise Fertigen zu können.

### Darstellung der Erfindung

Ausgehend vom Stand der Technik ist es Aufgabe der Erfindung ein Zahnimplantat zur Verfügung zu stellen, welches eine einfache und zuverlässige Positionierung von Hilfskomponenten und Sekundärteilen ermöglicht. Diese Aufgabe wird gelöst durch ein erfindungsgemässes Zahnimplantat gemäss dem unabhängigen Anspruch und durch ein erfindungsgemässes Zahnersatzsystem. Weitere bevorzugte Ausführungsformen sind in den abhängigen Ansprüchen gegeben.

Unter Implantat ist im Folgenden jener Teil eines Zahnersatzsystems zu verstehen, welcher in den Kieferknochen eingebracht wird. Die Elemente die mit dem Implantat verbunden werden, sind Hilfskomponenten für eine vorübergehende Versorgung oder Sekundärteile für eine definitive Versorgung. Beispiele für solche Hilfskomponenten und Sekundärteile sind Abdruckpfosten, Gingivaformer, Healingcaps, provisorische Abutments, Massivsekundärteile und rotationsgesicherte, verschraubte Abutments.

Das erfindungsgemässe Implantat dient zur Osseointegration in einen Kieferknochen und umfasst eine Aufnahmeöffnung, wobei ein Abschnitt der Aufnahmeöffnung als ein Innenmehrkant ausgebildet ist. Das Implantat weist an seinem distalen Ende eine Indexierung auf, die die Geometrie und die Winkelstellung des Innenmehrkants in der Aufnahmeöffnung des Implantats wiedergibt. Die Lage des Innenmehrkants ist dadurch für den Zahnarzt oder den Kieferorthopäden am distalen Ende des Implantats optisch und taktil gut erkennbar, erleichtert die Positionierung von Sekundärteilen oder Hilfskomponenten und ermöglicht deren optimale Ausrichtung in Bezug auf den Innenmehrkant im Inneren des Implantats. Des Weiteren wird durch die Indexierung auch bei grossen Winkeldivergenzen, einer Schräglage des eingewachsenen Implantats, eine spannungsfreie Abdrucknahme ermöglicht. Somit wird das Ergebnis des Abdrucks genauer und die Ausschussquote der vorproduzierten Laborteile (Kronen oder Stege) kann verringert werden.

In einer bevorzugten Ausführungsform gibt die Indexierung die radiale Winkelstellung (in Bezug auf die Implantat-Längsachse) und die Geometrie inklusive der Anordnung und Anzahl der Seitenflächen des Innenmehrkants wieder. Die Indexierung ist bevorzugt an einer die Aufnahmeöffnung umlaufenden Schulter angeordnet, besonders bevorzugt stirnseitig. Wenn im Rahmen der vorliegenden Erfindung von Indexierung die Rede ist, dann umfasst dieser Begriff auch eine Mehr- oder Vielzahl von Teil-Indexierungen, die zusammen die erfindungsgemässe Indexierung bilden.

In einer nicht anspruchsgemässen Ausführungsform weist die Aufnahmeöffnung des Implantats einen Innenmehrkant, ein Innengewinde, einen zwischen dem Innengewinde und dem Innenmehrkant angeordneten Zylinder, vorzugsweise einen Passzylinder, auf. Das proximale Ende der Aufnahmeöffnung wird durch einen Teil eines Bajonettverschlusses gebildet. Durch das Innengewinde wird das einfache Befestigen
von Hilfskomponenten bis hin zu Sekundärteilen ermöglicht. Ein weiterer Vorteil des Innengewindes besteht darin besteht in seiner Drainagefunktion. Werden Sekundärteile, beispielsweise Abutments nicht mit dem Implantat verschraubt sondern werden zementiert, so dient das Innengewinde als eine Art Drainagekanal, welcher für eine gleichmässige Verteilung des Zements, z. B. um einen Abutmentpfosten sorgt. Des weiteren wird durch die Gewindegeometrie und die gleichmässige Verteilung des Zements ein hydrostatischer Pumpeffekt verhindert und somit eine präzise und stabile Positionierung der Sekundärkomponente im Implantat sichergestellt. Das Innengewinde verschafft weiterhin den Vorteil, dass Abdruckteile (Abdruckpfosten, Sicherheitsstift) mit dem Implantat stabil verschraubt werden können. Werden die Abdruckteile nicht verschraubt sondern nur in das Implantat gesteckt besteht die Möglichkeit, dass diese von der umliegende Gingiva wieder abgedrückt werden und so der Abdruck unbrauchbar wird. Wenn in den nachfolgenden Absätzen von einer Passzylinderbohrung die Rede ist umfasst dieser Begriff nicht nur Bohrungen, sondern grundsätzlich Aufnahmeöffnungen im Implantat unabhängig davon, ob diese mittels Bohren oder auf andere Art und Weise geschaffen wurden. Im erfindungsgemässen Implantat ist ein Teil der Aufnahmeöffnung als eine Passzylinderbohrung ausgebildet, wobei diese Passzylinderbohrung mit einem Innengewinde kombiniert ist und das Innengewinde und die Passzylinderbohrung in axialer Richtung der Passzylinderbohrung überlappend angeordnet sind. Die Vorteile liegen darin, dass die Passzylinderbohrung der Aufnahmeöffnung als eine Gewindeverbindung dient und/oder mit einem Stamm einer Zahnersatzkomponente, einen entsprechenden Passsitz bildet.

In einer Ausführungsform ist das Innengewinde in die Passzylinderbohrung eingeschliffen und zwar auf jene Art und Weise, dass ausreichende Anteile der Passzylinderbohrung als zylindrische Anteile erhalten bleiben. Durch den zylindrischen Anteil der Passzylinderbohrung resultiert ein genauerer Kerndurchmesser der Aufnahmeöffnung der zur Kraftaufnahme genutzt werden kann.

In einer Ausführungsform der Erfindung sind die zylindrischen Anteile der Passzylinderbohrung dazu eingerichtet, mit einem Stamm einer Zahnersatzkomponente einen Passsitz zu bilden.

In einer weiteren Ausführungsform der Erfindung ist das Innengewinde, welches mit der Passzylinderbohrung überlappt mit einem Aussengewinde einer Zahnersatzkomponente verschraubt.

In einer weiteren Ausführungsform der Erfindung bilden der Stamm der Zahnersatzkomponente und die Passzylinderbohrung des Implantats einen Passsitz und das Aussengewinde der Zahnersatzkomponente mit dem überlappenden Innengewinde eine Schraubverbindung.

In einer Ausführungsform weist die Passzylinderbohrung des Implantats, bezogen auf Ihre zylindrische Mantelfläche einen zylindrischen Anteil von 20% bis 50% auf. Das Innengwinde, welches mit der Passzylinderbohrung überlappt umfasst, erfindungsgemäß, 50% bis 80% der zylindrischen Mantelfläche bzw. die zylindrischen Anteile der Mantelfläche der Passzylinderbohrung.

In einer bevorzugten Ausführungsform weist die Passzylinderbohrung, gemessen an Ihrer zylindrischen Mantelfläche einen zylindrischen Anteil von 28% auf. Das Innengewinde welches die Passzylinderbohrung überlappt, weist einen Anteil von 72% bezogen auf die zylindrische Mantelfläche auf. Ein Vorteil welcher aus dem erfindungsgemässen Implantat respektive aus dem Zahnersatzsystem resultiert ist, dass die Zahnersatzkomponente in das Implantat eingeklebt werden kann, wobei das Innengwinde entsprechend als Drainagekanal für den Klebstoff nutzbar ist.

Beim Passsitz handelt es sich um eine Spielpassung gemäss ISO Toleranzsystem 286-1, 286-2 mit max. 0.03 mm Untermass.

In einer weiteren Ausführungsform ist ein weiterer Abschnitt der Aufnahmeöffnung als ein Teil eines Bajonettverschlusses aus gebildet, welcher dazu dient Hilfskomponenten zu Befestigen. In einer bevorzugten Ausführungsform ist der Bajonettverschluss am proximalen Ende der Aufnahmeöffnung angeordnet.

In einer weiteren bevorzugten Ausführungsform ist der Bajonettverschluss distal zum Innenmehrkant der Aufnahmeöffnung angeordnet.

In einer weiteren bevorzugten Ausführungsform der Erfindung weist die Aufnahmeöffnung des Implantats einen Innenmehrkant, einen Teil eines Bajonettverschlusses , einen zwischen dem Bajonettverschluss und dem Innenmehrkant angeordneten Zylinder, vorzugsweise einen Passzylinder, auf.

Die Indexierung kann graphisch und/oder körperlich ausgebildet sein, beispielsweise in Form von Einkerbungen, Nuten, Ausnehmungen oder Bohrungen. Prinzipiell sind alle Formen denkbar die eine spätere positionsgenaue Ausrichtung von Hilfskomponenten und Sekundärteilen ermöglichen.

In einer bevorzugten Ausführungsform der Erfindung ist das erfindungsgemässe Implantat aus einem keramischen Werkstoff, vorzugsweise aus Zirkondioxid und/oder Aluminiumoxid gefertigt.

In einer bevorzugten Ausführungsform ist das erfindungsgemässe Implantat Teil eines Zahnersatzsystems bei dem die Indexierung des Implantats zur positionsgenauen Anordnung von mindestens einer weiteren Zahnersatzkomponente dient.

In einer Ausführungsform umfasst das Zahnersatzsystem ein Implantat mit Indexierung, wobei diese Indexierung eine Geometrie aufweist die mit einer proximale Ausnehmung einer Zahnersatzkomponente oder anderen Formschlussmitteln der Zahnersatzkomponente korrespondiert.

Eine solche Zahnersatzkomponente weist auf jener Seite die mit der Indexierung zusammenwirkt Formschlussmittel, vorzugsweise eine proximale Ausnehmung der Zahnersatzkomponente auf, die mit der Geometrie der Indexierung korrespondiert.

Unter Formschlussmittel sind körperliche Ausformungen an der Zahnersatzkomponente zu verstehen die dazu eingerichtet sind formschlüssig in die Indexierung des Implantats einzugreifen.

Gemäss einem Ausführungsbeispiel weist diese Ausnehmung einer Zahnersatzkomponente die Form eines Mehrkants auf, wobei die Seitenflächen des Mehrkants, in einem zusammengesetzten Zustand, in dem die Zahnersatzkomponente auf das Implantat aufgesetzt wird, in mindestens einer vorgegebenen Winkelposition in die Indexierung eingreifen. Dadurch wird die Ausnehmung und damit die gesamte Zahnersatzkomponente gegenüber dem proximalen Innenmehrkant der Aufnahmeöffnung des Implantats positionsgenau in einer gewünschten Winkelstellung ausgerichtet.

In einer Ausführungsform des erfindungsgemässen Zahnersatzsystem greift die proximale Ausnehmung der Zahnersatzkomponente bezogen auf eine Längsachse des Implantats, axial in die Indexierung ein.

In einer weiteren bevorzugten Ausführungsform der Erfindung ist die Zahnersatzkomponente zweiteilig aufgebaut. Der erste Teil umfasst ein Schraubgewinde das in das Innengewinde des Implantats eingeschraubt und zur Fixierung des zweiten Teils am Implantat verwendet werden kann. Der zweite Teil weist eine proximale Ausnehmung in Form eines Mehrkants auf, der wiederum mit der Indexierung des Implantats korrespondiert und zusammenwirkt um den zweiten Teil in einer vorgegebenen Winkelstellung am distalen Ende des Implantats zu positionieren.

In einer weiteren bevorzugten Ausführungsform der Erfindung handelt es sich bei der Zahnersatzkomponente um einen Abdruckpfosten umfassend einen Sicherungsstift, als ersten Teil und einen Transferpfosten als zweiten Teil.

In einer weiteren bevorzugten Ausführungsform handelt es sich bei der Zahnersatzkomponente um ein einteiliges Sekundärteil aus Kunststoff, Metall oder Keramik.

Aufgrund der erfindungsgemässen Indexierung ist es möglich, rotationsgesicherte Kronen auf einem rotationssymetrischen Sekundärteil, beispielsweise einem Abutment zu befestigen, ohne die genaue Winkelposition des Abutments bestimmen zu müssen. So wird das Problem der Reproduzierbarkeit der sich bei einem nicht rotationssymmetrischen Sekundärteil stellt umgangen. Das Abutment kann nach Einprobe entfernt und wieder eingesetzt werden.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: eine Ansicht des erfindungsgemässen Implantats von Oben,
- Fig. 2: eine perspektivische Darstellung des erfindungsgemässen Implantats,
- Fig. 3: eine Schnittdarstellung des Implantats,
- Fig. 4: eine perspektivische Ansicht eines zweitteiligen Abdruckpfostens,
- Fig. 5: (a) den Abdruckpfosten aus Figur 4 umfassend einen Transferpfosten und einen Sicherheitsstift im auseinander geschraubten und einem verbundenen Zustand (b) sowie den Transferpfosten und den Sicherheitsstift verbunden mit dem Implantat (c),
- Fig. 6: Ablaufschritte der prothetischen Versorgung, indirekte Abdrucknahme mit offenem Löffel,
- Fig. 7: Teilweiser Querschnitt durch das erfindungsgemässe Implantat und Abutment mit schematisch dargestelltem Kronenaufsatz,
- Fig. 8: (a) provisorischen Versorgung umfassend Fixierschraube und Hülse im Querschnitt, (b) provisorischen Versorgung umfassend Fixierschraube und Hülse in einer Seitenansicht,
- Fig. 9: (a) eine Seitenansicht des Transferpfostens aufgesetzt auf das Implantat (b) einen Schnitt DD, die Querschnittsfläche durch den Transferpfosten und das Implantat,
- Fig. 10: eine teilweise, schematische Schnittdarstellung der Aufnahmeöffnung des Implantats mit Passzylinderbohrung, überlappendem Innengewinde und eingeführter schematisch dargestellter Zahnersatzkomponente,
- Fig. 11: zeigt eine weitere Ausführungsform, wobei die Aufnahmeöffnung des Implantats schematisch einen Teil eines Bajonettverschlusses zeigt und ein Teil einer aufgesetzten Zahnkrone dargestellt ist,
- Fig.12: zeigt das erfindungsgemässe Implantat in einer Ansicht von oben mit einer bestimmten Ausführungsform der Indexierung.

### Wege zur Ausführung der Erfindung

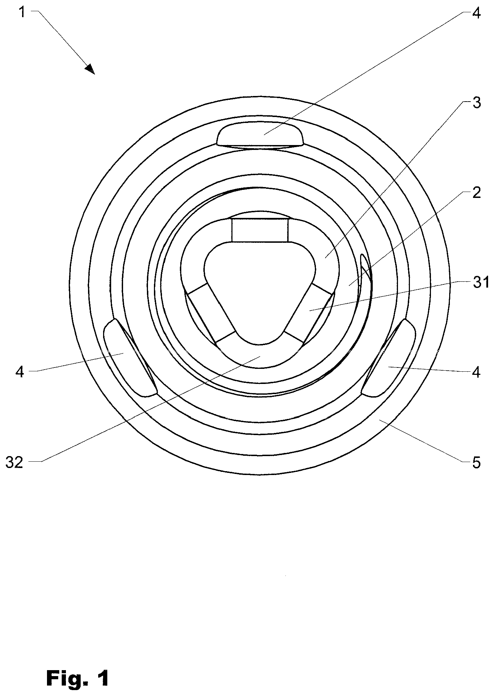

Figur 1 zeigt das erfindungsgemässe Zahnimplantat 1 im Querschnitt in einer Ansicht von Oben. In dieser bevorzugten Ausführungsform, gibt die Indexierung 4 die Seitenflächen 31 eines Innenmehrkant 3 wieder der als Dreikant ausgebildet ist. Die Indexierung 4 ist stirnseitig an einer die Aufnahmeöffnung 2 umlaufenden Schulter 5 angeordnet. In einer weiteren, in Figur 1 nicht dargestellten Ausführungsform der Erfindung gibt die Indexierung 4 die Kanten des Innenmehrkants 3 wieder.

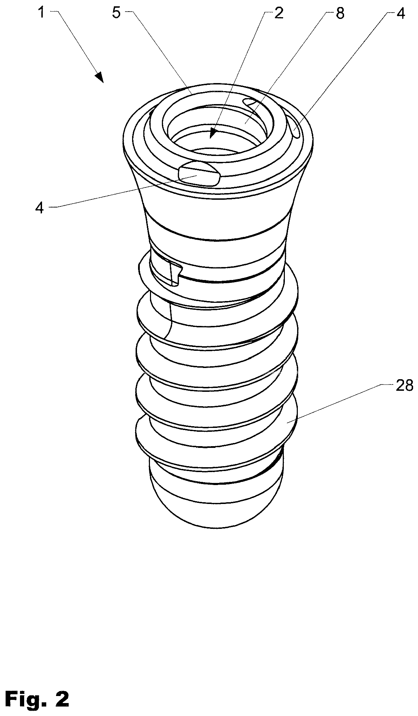

Figur 2 offenbart eine perspektivische Darstellung des erfindungsgemässen Zahnimplantats 1. Figur 2 zeigt das den Implantatkörper umlaufende Aussengewinde 28, welches zur Osseointegration in einen Kieferknochen dient. Figur 2 zeigt teilweise die Indexierung 4, angeordnet an der die Aufnahmeöffnung 2 umlaufenden Schulter 5, sowie das Innengewinde 8, welches beispielsweise zu Aufnahme eines Sicherheitsstiftes eines Abdruckpfostens dient.

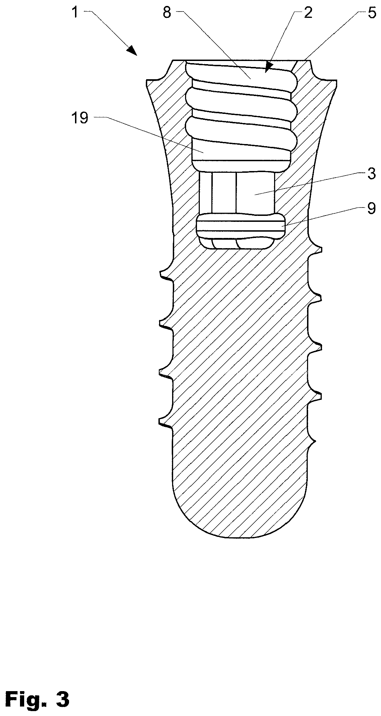

Figur 3 zeigt eine Schnittdarstellung durch das erfindungsgemässe Zahnimplantat 1. In der bevorzugten Ausführungsform gemäss Figur 3 umfasst die Aufnahmeöffnung 2 von distaler in proximaler Richtung aus gesehen, eine die Aufnahmeöffnung 2 umlaufende Schulter 5, das Innengewinde 8, einen Passzylinder 19, einen Innenmehrkant 3 und einen Teil eines Bajonettverschlusses 9. Der Passzylinder 19 ist verkürzt dargestellt.

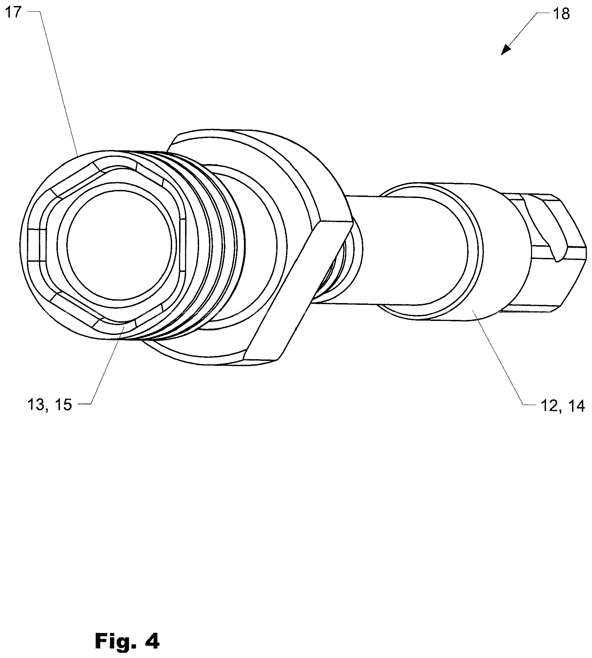

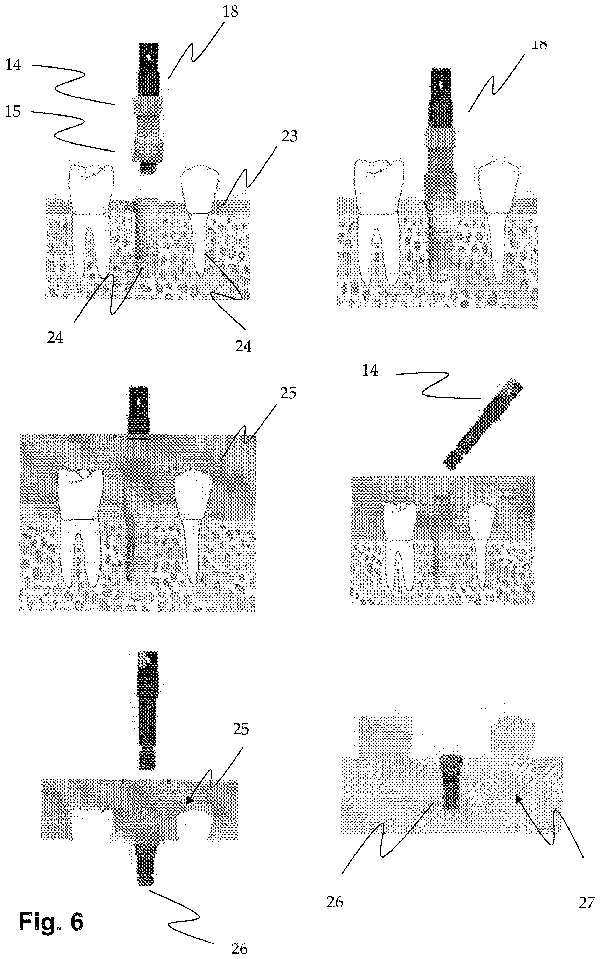

Figur 4 zeigt eine perspektivische Ansicht eines Abdruckpfostens 18 umfassend einen ersten Teil 12, den Sicherheitsstift 14 und einen zweiten Teil 13, den Transferpfosten 15. Der Sicherheitsstift dient dazu, den Transferposten 15 bei der Abdrucknahme im Implantat 1 zu fixieren. Wird der Transferpfosten 15 auf die umlaufende Schulter 5 des erfindungsgemässen Implantats 1 aufgesetzt, greift die proximale Ausnehmung 17 derart in die Indexierung ein, dass diese Ausnehmung gegenüber dem proximalen Innenmehrkant 3 der Aufnahmeöffnung des Implantats ausgerichtet ist (in Figur 4 nicht gezeigt). Der Transferpfosten 15 dient, wie zu Figur 6 erläutert sowohl die richtige radiale Position als auch die korrekte axiale Lage des Implantats auf eine Abdruckmasse zu übertragen die später dem Zahntechniker ermöglicht das Meistermodell zu erstellen.

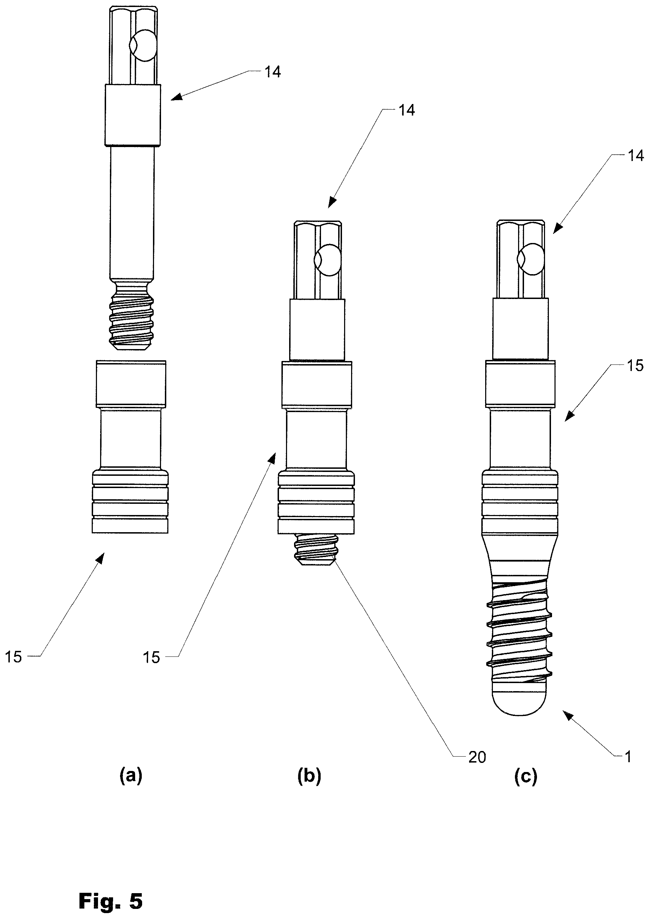

Figur 5 (a) - (c) zeigt den Sicherheitsstift 14 und den Transferpfosten 15. Der Sicherheitsstift 14 weist am proximalen Ende ein Schraubengewinde 20 auf, welches beim Aufsetzen des Transferpfostens 15 auf das Implantat 1 in das Innengewinde 8 des Implantats eingreift (nicht gezeigt). Wie zu Figur 4 bereits beschrieben wird die zuverlässige Positionierung des Abdruckpfostens 18 auf dem Implantat 1 noch zusätzlich durch das eingreifen der proximalen Ausnehmung in der Indexierung verbessert (In Figur 5 (c) nicht sichtbar).

Figur 6 zeigt schematisch den Arbeitsablauf bei der Abdrucknahme mit einem offenen Löffel. Das Implantat 1 ist im Kieferknochen 24 eingeheilt und tritt durch den Zahnfleischrand 23. Zur Durchführung eines sogenannten Pick-up Abdrucks wird ein zweiteiliger Abdruckpfosten 18 umfassend einen Sicherheitsstift 14 und einen Transferpfosten 15 verwendet. In korrekter Endposition sitzt der Transferpfosten 15 rotationsgesperrt auf der die Aufnahmeöffnung des Implantats umlaufenden Schulter und wird zusätzlich durch den Sicherheitsstift 14 im Implantat fixiert. Im nächsten Schritt wird die Abdruckmasse bis auf die Höhe des Transferpfosten 15 im Mund des Patienten verteilt. Nach Ende der Aushärtungszeit der Abdruckmasse wird der Sicherheitsstift 14 gelöst und die Abdruckmasse 25 gemeinsam mit der Transferpfosten 15 aus dem Mund des Patienten entfernt. Im Zahntechniklabor wird der Transferpfosten 15 mit einer Replica 26 und dem Sicherheitsstift 14 verschraubt und das Gipsmodell 27 erstellt. Durch die erfindungsgemässe Indexierung, die die rotationsgesperrte Positionierung des Transferpfostens auf dem eingewachsenen Implantat sicherstellt kann die genaue Lage des Implantats, zur passgenauen Anfertigung eines Sekundärteils (z.B. Abutment, Krone), auf das Gipsmodell 27 übertragen werden.

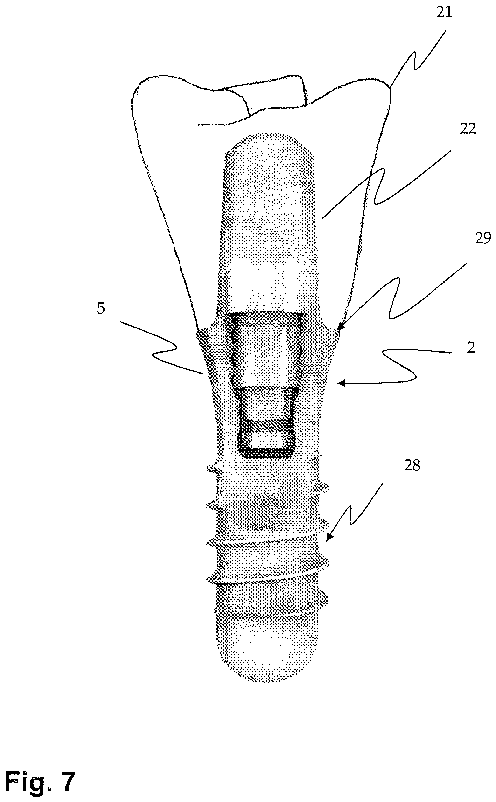

Figur 7 zeigt einen Schnitt durch das erfindungsgemässe Implantat 1 aufweisend ein Aussengewinde 28, ein in die Aufnahmeöffnung des Implantats eingesetzte Abutment 22 mit aufgesetzter Krone 21. Die umlaufenden Schulter 5 der Aufnahmeöffnung 2 ist stufenförmig ausgebildet. Dies ermöglicht eine entsprechende horizontale Auflagefläche 29 für die Krone 21, sodass die geforderte Mindestwandstärke bei keramischen Kronen eingehalten werden kann.

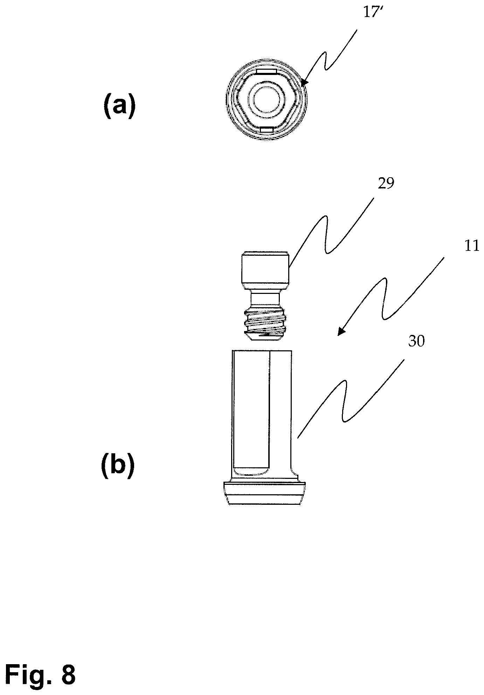

Fig. 8 zeigt eine provisorischen Versorgung 11 die mit dem erfindungsgemässen Implantat verbunden werden kann. Die provisorische Versorgung ist zweiteilig aufgebaut und umfasst eine Fixierschraube 29 sowie eine Hülse 30. Die Hülse 30 weist an jener Seite an der Sie mit der umlaufenden Schulter 5 der Aufnahmeöffnung 2 des Implantats 1 in Kontakt steht eine proximale Ausnehmung 17'. Wird die Hülse 30 vom Zahnarzt auf das Implantat aufgesetzt greift die proximale Ausnehmung 17' in die Indexierung am Implantat ein und ist auf diese Weise gegenüber dem proximalen Innenmehrkant 3 der Aufnahmeöffnung des Implantats ausgerichtet. Die Fixierung der Hülse 30 am Implantat erfolgt mittels der Fixierschraube 29, die mit ihrem proximalen Ende in das Innengewinde 8 des Implantats eingreift (aus Figur 8 nicht ersichtlich).

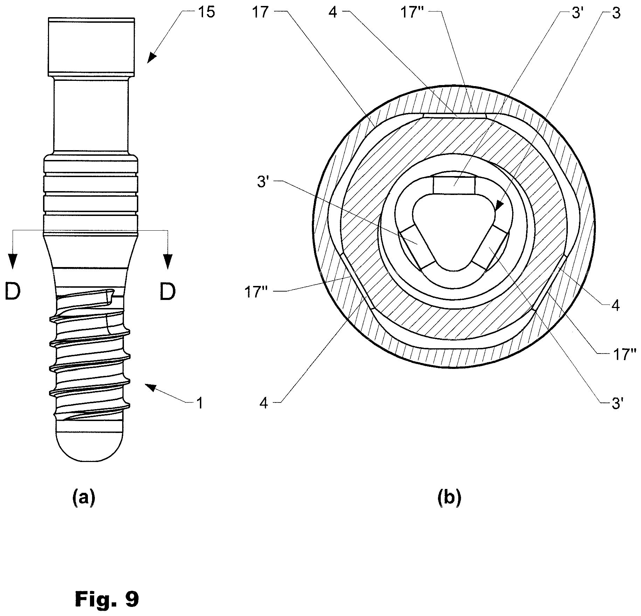

Figur 9 (a) zeigt den Transferpfosten 15 verbunden mit dem erfindungsgemässen Implantat 1 ohne Fixierung mit dem Sicherheitsstift. Figur 9 (b) zeigt einen Schnitt durch den Transferpfosten 15 und durch das Implantat 1 an der Achse DD. Diese Darstellung verdeutlicht, dass die Indexierung 4 angeordnet an der umlaufenden Schulter 5, zu den Seitenflächen 3' des Innenmehrkant 3 ausgerichtet ist. Die proximale Ausnehmung 17 des Transferpfostens 15 greift mit ihrer Innenfläche 17" in die Indexierung 4 ein, wodurch eine rotationsgesperrte, auf den Innenmehrkant 3 ausgerichtete Position erzielt wird.

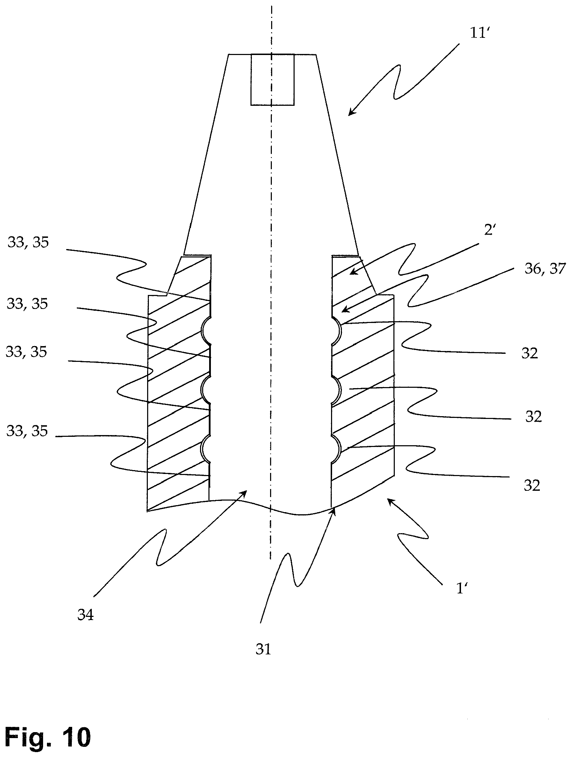

Figur 10 zeigt schematisch eine weitere bevorzugte Ausführungsform des erfindungsgemässen Implantats 1' teilweise, in einer Schnittdarstellung wobei die Aufnahmeöffnung 2' eine Passzylinderbohrung 31 umfasst. Die Passzylinderbohrung 31 wird in axialer Richtung von einem Innengewinde 32 überlappt. Die Passzylinderbohrung weist einen zylindrischen Anteil 33 auf. In die Aufnahmeöffnung 2' eingeführt ist ein Stamm 34 einer Zahnersatzkomponente 11'. Der Stamm 34 bildet an den Berührflächen mit dem zylindrischen Anteil 33 der Passzylinderbohrung 31 einen Passsitz 35. Der Stamm 34 der Zahnersatzkomponente 11', weist ein Aussengewinde 36 mit entsprechenden Gewindeflanken 37 auf, welche mit dem Innengewinde 32 verschraubt sind. Ist die Zahnersatzkomponente 11', im erfindungsgemässen Implantat 1' eingesetzt, werden die Gewindeflanken 37 nur auf Zug beansprucht.

In der in Figur 10 dargestellten Ausführungsform weist der weist die Passzylinderbohrung 31, gemessen an Ihrer zylindrischen Mantelfläche einen zylindrischen Anteil von 28% auf. Das Innengewinde 32 welches die Passzylinderbohrung überlappt, weist einen Anteil von 72% bezogen auf die zylindrische Mantelfläche auf.

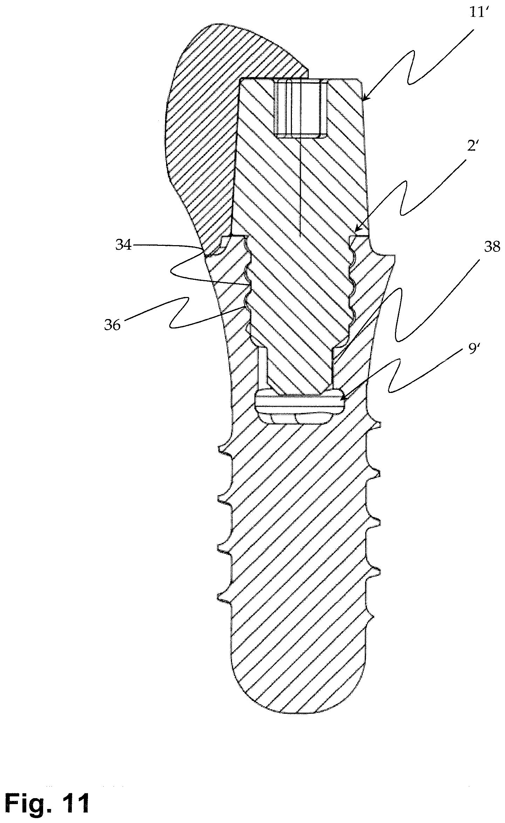

Figur 11 zeigt die Aufnahmeöffnung 2' die als einen weiteren Abschnitt einen Teil eines Bajonettverschlusses 9' zeigt, vorzugsweise ist dieser an einem proximalen Ende der Aufnahmeöffnung 2' angeordnet. Der Stamm 34 weist ein Aussengewinde 36 auf, welches mit dem Innengewinde 32 verschraubt ist. In proximaler Richtung zum Aussengewinde 36 ist an der Zahnersatzkomponente ein Aussenmehrkant 38 angeordnet der in einen Innenmehrkant des Implantats 1' eingreift.

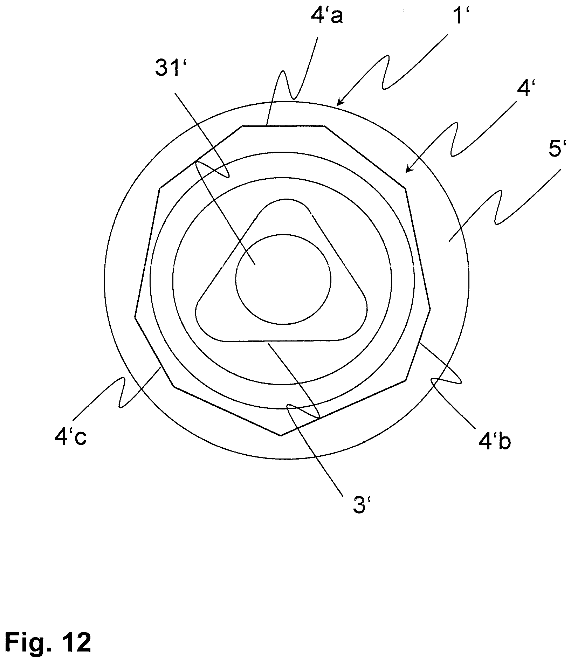

Fig. 12 zeigt das Implantat 1' in einer Ansicht von Oben aufweisend eine Aufnahmeöffnung mit einem Innenmehrkant 3', in Form eines Dreikants und einen Passzylinderbohrung 31'. An der umlaufenden Schulter 5' ist eine Indexierung 4' angeordnet. In der Ausführungsform nach Fig. 12 ist die Indexierung 4' als Neunkant ausgebildet, wobei drei der Seiten 4'a bis 4'c des Neunkants kürzer gestaltet sind als die übrigen sechs Seiten. Die drei Seiten 4'a bis 4'c geben die Position des Innenmehrkants 3', welcher die Form eines Dreikant aufweist, wieder. Die Seiten 4'a bis 4'c sind in der Ausführungsform gemäss Fig. 12 derart angeordnet, dass sie die Lage der Eckpunkte des Dreikants indexieren. Ein Vorteil der sich aus dieser Anordnung ergibt ist, dass eine entsprechend grosse Fläche zur Indexierung zur Verfügung gestellt werden kann, welche dem Zahnarzt die Handhandhabung des Zahnersatzsystems erleichtert.

### Bezugzeichenliste

- 1, 1': Implantat
- 2, 2': Aufnahmeöffnung
- 3: Innenmehrkant
- 3': Seitenflächen des Innenmehrkants
- 31: Seitenflächen des Innenmehrkants
- 32: Kanten des Innenmehrkants
- 4, 4': Indexierung
- 4'a-4'c: kurze Seiten des Neunkants
- 5, 5': umlaufende Schulter
- 8: Innengewinde
- 9: ein Teil eines Bajonettverschlusses
- 10: Einkerbung
- 11, 11': Zahnersatzkomponente
- 12: erster Teil
- 13: zweiter Teil
- 14: Sicherungsstift
- 15: Transferpfosten
- 16: einteiliges Sekundärteil
- 17, 17': proximale Ausnehmung
- 17": Innenflächen der proximalen Ausnehmung
- 18: Abdruckpfosten
- 19: Zylinder
- 20: Schraubgewinde
- 21: Zahnkrone
- 22: Abutment
- 23: Zahnfleischrand
- 24: Kieferknochen
- 25: Abdruckmasse
- 26: Replica
- 27: Gipsmodell
- 28: Aussengewinde
- 29: Fixierschraube
- 30: Hülse
- 31, 31': Passzylinderbohrung (Aufnahmeöffnung)
- 32: Innengewinde (Aufnahmeöffnung)
- 33: zylindrischer Anteil (Aufnahmeöffnung)
- 35: Passsitz
- 34: Stamm (Zahnersatzkomponente)
- 36: Aussengewinde (Zahnersatzkomponente)
- 37: Gewindeflanken des Aussengewindes (Zahnersatzkomponente)
- 38: Aussenmehrkant

## Patentansprüche

1. Ein Implantat (1) zur Osseointegration in einen Kieferknochen mit einer Aufnahmeöffnung (2) wobei ein Abschnitt der Aufnahmeöffnung (2) als ein Innenmehrkant (3) ausgebildet ist, wobei das Implantat (1) an seinem distalen Ende eine Indexierung (4) aufweist die die radiale Winkelstellung und die Geometrie des Innenmehrkants (3) wiedergibt wobei ein weiterer Abschnitt der Aufnahmeöffnung (2) als eine Passzylinderbohrung (31, 19) ausgebildet ist, wobei die Passzylinderbohrung (31, 19) in axialer Richtung von einem Innengewinde (32, 8) überlappt wird, sodass ausreichende Anteile der Passzylinderbohrung (19, 31) als zylindrische Anteile erhalten bleiben, **dadurch gekennzeichnet, dass** das Innengwinde (32, 8), welches mit der Passzylinderbohrung (19, 31) überlappt, 50% bis 80% der zylindrischen Anteile der Mantelfläche der Passzylinderbohrung (19, 31) umfasst und die Passzylinderbohrung (31, 19) dazu eingerichtet ist, mit einem Stamm (34) einer Zahnersatzkomponente einen Passsitz (35) und/oder eine Gewindeverbindung zu bilden.

2. Das Implantat (1) nach Anspruch 1, **dadurch gekennzeichnet, dass** die Indexierung (4) die Anordnung und Anzahl der Seitenflächen (31) des Innenmehrkants (3) wiedergibt.

3. Das Implantat (1) nach einem der vorangegangenen Ansprüche 1 bis 2, **dadurch gekennzeichnet, dass** die Indexierung (4) an einer die Aufnahmeöffnung (2) umlaufenden Schulter (5) angeordnet ist, vorzugsweise stirnseitig.

4. Das Implantat nach Anspruch1, **dadurch gekennzeichnet, dass** das Innengewinde (8, 32) distal zum Innenmehrkant (3) angeordnet ist.

5. Das Implantat (1) nach einem der vorangegangenen Ansprüche 1 bis 4, **dadurch gekennzeichnet dass** ein weiterer Abschnitt der Aufnahmeöffnung (2) einen Teil eines Bajonettverschlusses (9) aufweist.

6. Das Implantat nach Anspruch 5, **dadurch gekennzeichnet, dass** der Bajonettverschluss (9) an einem proximalen Ende der Aufnahmeöffnung (2) angeordnet ist.

7. Das Implantat (1) nach einem der vorangegangenen Ansprüche 1 bis 6, **dadurch gekennzeichnet, dass** die Indexierung (4) graphisch und/oder körperlich ausgebildet ist, vorzugsweise durch mindestens eine Einkerbung (10), Nut, Ausnehmung oder eine Bohrung.

8. Implantat nach Anspruch 7, **dadurch gekennzeichnet, dass** die Indexierung (4, 4') als Mehrkant, vorzugsweise Neunkant ausgebildet ist.

9. Implantat nach Anspruch 8, **dadurch gekennzeichnet, dass** der Mehrkant unterschiedliche Seitenlängen aufweist, vorzugsweise drei kurze und sechs lange Seiten.

10. Das Implantat (1) nach einem der vorangegangenen Ansprüche 1 bis 9, **dadurch gekennzeichnet, dass** das Implantat (1) aus einem keramischen Werkstoff, vorzugsweise aus Zirkondioxid und/oder Aluminiumoxid gefertigt ist.

11. Ein Zahnersatzsystem umfassend ein Implantat nach einem der vorangegangenen Ansprüche 1 bis 10, **dadurch gekennzeichnet, dass** die Indexierung (4) mit einer auf die Geometrie der Indexierung abgestimmten proximalen Ausnehmung (17) oder anderen Formschlussmitteln einer Zahnersatzkomponente (11) korrespondiert.

12. Das Zahnersatzsystem nach Anspruch 11, **dadurch gekennzeichnet, dass** die Zahnersatzkomponente (11) auf jener Seite die mit der Indexierung (4) korrespondiert eine proximale Ausnehmung (17) in Form eines Mehrkant aufweist.

13. Das Zahnersatzsystem nach Anspruch 11, **dadurch gekennzeichnet, dass** die proximale Ausnehmung (17) der Zahnersatzkomponente (11) formschlüssig mit der Indexierung (4) des Implantats (1) zusammenwirkt, so dass diese Ausnehmung (17) gegenüber dem Innenmehrkant (3) der Aufnahmeöffnung (2) des Implantats positionsgenau in einer gewünschten Winkelstellung ausgerichtet ist.

14. Das Zahnersatzsystem nach Anspruch 13, **dadurch gekennzeichnet, dass** die proximale Ausnehmung (17) der Zahnersatzkomponente (11) bezogen auf eine Längsachse des Implantats, axial in die Indexierung eingreift.

15. Das Zahnersatzsystem nach Anspruch 13, **dadurch gekennzeichnet, dass** die Zahnersatzkomponente (11) zweiteilig aufgebaut ist, der erste Teil (12) ein Schraubgewinde (20), verbindbar mit dem Innengewinde (8, 32) des Implantats (1) umfasst und der zweite Teil (13) mit der Indexierung (4) des Implantats (1) korrespondiert.

16. Das Zahnersatzsystem nach Anspruch 15 **dadurch gekennzeichnet, dass** es sich bei der Zahnersatzkomponente (11) um einen Abdruckpfosten (18) umfassend einen Sicherungsstift (14), als ersten Teil und einen Transferpfosten (15) als zweiten Teil handelt.

17. Das Zahnersatzsystem nach Anspruch 11, **dadurch gekennzeichnet, dass** das es sich bei der Zahnersatzkomponente (11) um ein einteiliges Sekundärteil (16) aus Kunststoff, Metall oder Keramik handelt.

## Claims

1. Implant (1) for osseointegration into a jaw bone, said implant having a receiving opening (2), wherein a portion of the receiving opening (2) is realized as an inner polygon (3), wherein at its distal end the implant (1) comprises an indexing (4) which reproduces the radial angular position and the geometry of the inner polygon (3), wherein a further portion of the receiving opening (2) is realized as a fitting cylinder bore (31, 19), wherein the fitting cylinder bore (31, 19) is overlapped in the axial direction by an internal thread (32, 8) such that sufficient proportions of the fitting cylinder bore (19, 31) are maintained as cylindrical proportions, **characterized in that** the internal thread (32, 8), which overlaps the fitting cylinder bore (19, 31), includes between 50% and 80% of the cylindrical proportions of the lateral surface of the fitting cylinder bore (19, 31) and the fitting cylinder bore (31, 19) is set up for the purpose of forming a fit (35) with and/or a threaded connection to a stem (34) of a tooth replacement component.

2. Implant (1) according to Claim 1, **characterized in that** the indexing (4) reproduces the arrangement and number of the side faces (31) of the inner polygon (3).

3. Implant (1) according to either of the preceding Claims 1 to 2, **characterized in that** the indexing (4) is arranged on a shoulder (5) which runs around the receiving opening (2), preferably on an end face.

4. Implant according to Claim 1, **characterized in that** the internal thread (8, 32) is arranged distally with respect to the inner polygon (3).

5. Implant (1) according to one of preceding Claims 1 to 4, **characterized in that** a further portion of the receiving opening (2) comprises part of a bayonet closure (9).

6. Implant according to Claim 5, **characterized in that** the bayonet closure (9) is arranged on a proximal end of the receiving opening (2).

7. Implant (1) according to one of preceding Claims 1 to 6, **characterized in that** the indexing (4) is realized in a graphic and/or physical manner, preferably by means of at least one notch (10), groove, recess or bore.

8. Implant according to Claim 1, **characterized in that** the indexing (4, 4') is realized as a polygon, preferably a nonagon.

9. Implant according to Claim 8, **characterized in that** the polygon comprises sides of different lengths, preferably three short and six long sides.

10. Implant (1) according to one of preceding Claims 1 to 9, **characterized in that** the implant (1) is produced from a ceramic material, preferably from zirconium dioxide and/or aluminum dioxide.

11. Tooth replacement system comprising an implant according to one of the preceding Claims 1 to 10, **characterized in that** the indexing (4) corresponds with a proximal recess (17) which is matched to the geometry of the indexing or with other positive locking means of a tooth replacement component (11).

12. Tooth replacement system according to Claim 11, **characterized in that** the tooth replacement component (11) comprises a proximal recess (17) in the form of a polygon on the side that corresponds with the indexing (4).

13. Tooth replacement system according to Claim 11, **characterized in that** the proximal recess (17) of the tooth replacement component (11) interacts in a positive locking manner with the indexing (4) of the implant (1) such that said recess (17) is aligned precisely at a desired angular position in relation to the inner polygon (3) of the receiving opening (2) of the implant.

14. Tooth replacement system according to Claim 13, **characterized in that** the proximal recess (17) of the tooth replacement component (11) engages axially in the indexing with reference to a longitudinal axis of the implant.

15. Tooth replacement system according to Claim 13, **characterized in that** the tooth replacement component (11) is constructed in two parts, the first part (12) includes a screw thread (20) which is connectable to the internal thread (8, 32) of the implant (1) and the second part (13) corresponds with the indexing (4) of the implant (1).

16. Tooth replacement system according to Claim 15, **characterized in that** the tooth replacement component (11) is an impression coping (18) which includes a retaining pin (14) as the first part and a transfer coping (15) as the second part.

17. Tooth replacement system according to Claim 11, **characterized in that** the tooth replacement component (11) is a one-part secondary part (16) which is produced from plastics material, metal or ceramic material.

## Revendications

1. Un implant (1) destiné à l'ostéo-intégration dans un os de mâchoire, doté d'une ouverture de réception (2), dans lequel une section de l'ouverture de réception (2) est conçue comme un polygone interne (3), dans lequel l'implant (1) comporte un indexage (4) à son extrémité distale, lequel reproduit la position angulaire radiale et la géométrie du polygone intérieur (3), dans lequel une section ultérieure de l'ouverture de réception (2) est conçue comme un alésage cylindrique (31, 19), dans lequel l'alésage cylindrique (31, 19) est chevauché dans la direction axiale par un filetage interne (32, 8), de sorte que des fractions suffisantes de l'alésage cylindrique (19, 31) restent cylindriques, **caractérisé en ce que** le filetage interne (32, 8), en chevauchement avec l'alésage cylindrique (19, 31), comprend entre 50 % et 80 % des fractions cylindriques de la surface enveloppante de l'alésage cylindrique (19, 31) et l'alésage cylindrique (31, 19) est disposé de façon à former avec un tronc (34) d'un composant de prothèse dentaire un ajustement (35) et/ou un raccordement par vis.

2. L'implant (1) selon la revendication 1, **caractérisé en ce que** l'indexage (4) reproduit l'arrangement et le nombre des surfaces latérales (31) du polygone interne (3).

3. L'implant (1) selon l'une des revendications précédentes 1 à 2, **caractérisé en ce que** l'indexage (4) est arrangé sur un épaulement (5) entourant l'ouverture de réception (2), de préférence frontalement.

4. L'implant selon la revendication 1, **caractérisé en ce que** le filetage interne (8, 32) est arrangé de façon distale par rapport au polygone interne (3).

5. L'implant (1) selon l'une des revendications précédentes 1 à 4, **caractérisé en ce qu'**une section ultérieure de l'ouverture de réception (2) comporte une partie d'une fermeture à baïonnette (9).

6. L'implant selon la revendication 5, **caractérisé en ce que** la fermeture à baïonnette (9) est arrangée à une extrémité proximale de l'ouverture de réception (2).

7. L'implant (1) selon l'une des revendications précédentes 1 à 6, **caractérisé en ce que** l'indexage (4) est conçu de manière graphique et/ou corporelle, de préférence au moyen d'au moins une échancrure (10), rainure, cavité ou perforation.

8. Implant selon la revendication 7, **caractérisé en ce que** l'indexage (4, 4') est conçu comme polygone, de préférence comme ennéagone.

9. Implant selon la revendication 8, **caractérisé en ce que** le polygone comporte des côtés de longueurs différentes, de préférence trois côtés courts et six côtés longs.

10. L'implant (1) selon l'une des revendications précédentes 1 à 9, **caractérisé en ce que** l'implant (1) est fabriqué à partir d'un matériau céramique, de préférence en dioxyde de zirconium et/ou en oxyde d'aluminium.

11. Un système de prothèse dentaire comprenant un implant selon l'une des revendications précédentes 1 à 10, **caractérisé en ce que** l'indexage (4) correspond avec une cavité (17) proximale adaptée à la géométrie de l'indexage ou d'autres moyens d'assemblage par complémentarité de forme d'un composant de prothèse dentaire (11).

12. Le système de prothèse dentaire selon la revendication 11, **caractérisé en ce que** le composant de prothèse dentaire (11) comporte sur chaque face correspondant à l'indexage (4) une cavité proximale (17) de forme polygonale.

13. Le système de prothèse dentaire selon la revendication 11, **caractérisé en ce que** la cavité proximale (17) du composant de prothèse dentaire (11) coopère par complémentarité de forme avec l'indexage (4) de l'implant (1), de sorte que cette cavité (17) est orientée précisément dans une position angulaire souhaitée par rapport au polygone interne (3) de l'ouverture de réception (2).

14. Le système de prothèse dentaire selon la revendication 13, **caractérisé en ce que** la cavité proximale (17) du composant de prothèse dentaire (11) s'insère axialement dans l'indexage par rapport à un axe longitudinal de l'implant.

15. Le système de prothèse dentaire selon la revendication 13, **caractérisé en ce que** le composant de prothèse dentaire (11) est construit en deux parties, la première partie (12) comprend un pas de vis (20) pouvant se lier avec le filetage interne (8, 32) de l'implant (1) et la seconde partie (13) correspondant à l'indexage (4) de l'implant (1).

16. Le système de prothèse dentaire selon la revendication 15, **caractérisé en ce que** par composant de prothèse dentaire (11) on entend un élément d'empreinte (18) comprenant une goupille de verrouillage (14) comme première partie et un élément de transfert (15) comme deuxième partie.

17. Le système de prothèse dentaire selon la revendication 11, **caractérisé en ce que** par composant de prothèse dentaire (11) on entend une partie secondaire (16) d'une pièce en plastique, en métal ou en céramique.
